# EUROPÄISCHE PATENTSCHRIFT

(11) **EP 3 406 916 B1**
(45) Veröffentlichungstag und Bekanntmachung des Hinweises auf die Patenterteilung: **07.06.2023**
(21) Anmeldenummer: 17173061.7
(22) Anmeldetag: 26.05.2017
(51) Int. Cl.: F16B 7/04, F16B 7/18

(54) **WINKELVERBINDER FÜR TRAGPROFILE**
ANGLE CONNECTOR FOR LOADBEARING SECTIONS
ÉQUERRE POUR PROFILÉS DE SUPPORT

(43) Veröffentlichungstag der Anmeldung: 28.11.2018
(73) Patentinhaber: Syma Intercontinental AG, 9533 Kirchberg (CH)
(72) Erfinder: ZÜLLIG, Kurt, 9533 Kirchberg SG (CH)
(74) Vertreter: Liebetanz, Michael

(56) Entgegenhaltungen:
- EP-A1- 0 871 824
- EP-A2- 2 146 101
- EP-B1- 0 871 824
- CA-A1- 2 270 709
- DE-A1- 2 833 428
- DE-A1- 19 712 100
- DE-B3-102006 010 012
- DE-U1-202014 001 278

## Beschreibung

### TECHNISCHES GEBIET

Die vorliegende Erfindung betrifft einen Winkelverbinder mit zwei senkrecht zueinander ausgerichteten freien Enden zum Einschieben in einen zugeordneten Hohlraum eines Tragprofils, wobei an jedem freien Ende des Winkelverbinders ein passives Fixierungsmittel vorgesehen ist, über welches von einer Aussenseite des Tragprofils her das betreffende Ende des Winkelverbinders mit dem zugeordneten Tragprofil durch ein komplementäres aktives Befestigungselement lösbar verbindbar ist.

### STAND DER TECHNIK

Aus der DE 20 2014 001 278 U1 ist ein L-förmiger Winkelverbinder bekannt, dessen freie Enden in zugeordnete Hohlräume von auf Gehrung geschnittenen Tragprofilen eingeschoben wird. In den Tragprofilen ist jeweils ein entsprechender Hohlraum zur Aufnahme der freien Enden des L-förmigen Verbinders vorgesehen. In den beiden senkrecht zueinander zu verbindenden Tragprofilen ist auf der Innenseite jeweils ein Schraubenloch vorgesehen, durch welches hindurch eine Schraube jeweils in eine entsprechend komplementäre Öffnung in dem L-förmigen Verbinder eingeschraubt wird. Damit sind die frontseitigen Profilwände der Tragprofile in der Ecke auf Stoss miteinander verbindbar.

Aus der WO 2016/027175 ist eine ähnliche Anmeldung bekannt, bei der zwei L-förmige Platten in komplementäre Nuten der beiden Tragprofile eingeschoben werden.

Eine Kombination mit den Merkmalen des Oberbegriffs des Anspruchs 1 ist aus der EP 2 146 101 A2 bekannt. Es wird ein Verbindungselement zum Verbinden eines Rohrabschnitts mit zwei weiteren Elementen zur Verfügung gestellt. Das Verbindungselement weist einen in den Rohrabschnitt einsteckbaren Grundkörper und wenigstens ein Verstellelement auf, durch das der Grundkörper zwischen einem Montagezustand und einem aufgeweiteten Verbindungszustand verstellbar ist. Der Grundkörper weist einen ersten Klemmabschnitt und einen zweiten Klemmabschnitt auf, welche relativ zueinander beweglich sind, wobei das Verstellelement in dem ersten Klemmabschnitt entlang einer Verstellachse beweglich gelagert ist. Eine Wirkfläche des Verstellelements kann derart mit einer dem zweiten Klemmabschnitt zugeordneten Angriffsfläche in Eingriff gebracht werden, dass der Querschnitt des Grundkörpers sowohl in Richtung der Verstellachse als auch quer dazu erweitert wird.

Ein den Aufbau eines kompletten Rahmens erlaubender Winkelverbinder ist aus der CA 2 270 709 A1 bekannt. Dieses besteht dann aus zwei Kombinationen von einem, ein erstes und ein zweites Tragprofil verbindenden Winkelverbinder, die über zwei weitere Winkelverbinder zu dem genannten Rahmen führen. Diese Rahmen sind an einem vertikalen Tragprofil befestigbar, welches Tragprofil über einen zentralen Schlitz verfügt, in dem ein Winkelverbinder verriegelbar ist.

### DARSTELLUNG DER ERFINDUNG

Ausgehend von diesem Stand der Technik liegt der Erfindung die Aufgabe zu Grunde, eine verbesserte Kombination von einem Winkelverbinder mit zwei Tragprofile anzugeben. Dabei können gleichartige Tragprofile als Rahmen zusammengesetzt und mit weiteren einzusetzenden Tragprofilen zu Wänden mit einer geringen Anzahl von stützenden Profilen zusammengesetzt werden. Dabei kann die Verbesserung in einer eine geringere Drehbewegung erforderliche Manipulation der Schraube als komplementäres Befestigungselement bestehen. Die Verbesserung kann ferner darin bestehen, dass neben der reinen Befestigung der Tragprofile aneinander auch ein Anziehen der Tragprofile gegeneinander erreicht wird. Schliesslich besteht ein Vorteil der erfindungsgemässen Vorrichtung darin, dass der Profilverbinder modular aufgebaut werden kann und schliesslich kann der Verbinder in einfacher Weise vormontiert werden. Gleichzeitig kann er die volle Funktionalität der beiden aufeinander treffenden Tragprofile in der Ecke durch ein Eckelement übernehmen.

Diese Aufgabe wird erfindungsgemäss durch eine Kombination von einem Winkelverbinder mit einem ersten Tragprofil und mit einem zweiten Tragprofil mit den Merkmalen des Anspruchs 1 gelöst.

Die freien Enden des Winkelverbinders im über das Eckelement überstehenden Teil können einen in der Aussenform quaderförmigen Körper für eine formschlüssige Aufnahme in eine komplementäre Ausnehmung in dem zugeordneten freien Ende des Tragprofils aufweisen.

Vorteilhaft ist dann, wenn mindestens ein freies Ende des Winkelverbinders ein passives Fixierungsmittel in Gestalt eines über den quaderförmigen Körper hinaus herausragenden Bolzen aufweist, der im Zylindermantel eine konusförmige Vertiefung aufweist, wobei dem Bolzen eine Hülse mit Querbohrung zur Aufnahme des Bolzens und einem Innengewinde an einem freien Ende der Hülse für einen Einsatz der Hülse in dem Tragprofil zugeordnet ist. Dann kann nämlich mit einer in das Innengewinde einschraubbaren Verriegelungsschraube mit konusförmigen Ende das Tragprofil an das Eckelement angezogen werden kann. Dann ist der Eckverbinder nicht nur mit Tragprofil verbunden, sondern die beiden Elemente sind in Längsrichtung des Tragprofils auch aufeinander zu verriegelt, wobei dann die Aussenflächen aneinander anstossen.

Bei einer Alternative ist dann mindestens ein freies Ende des Winkelverbinders ein passives Fixierungsmittel in Gestalt eines im quaderförmigen Körper ausgebildeten Verschlussschlitzes mit Hinterschneidungen, dem ein in dem zugeordneten Tragprofil angeordneter Verschluss zugeordnet ist. Dabei ist ein Verschluss beispielsweise wie die EP 0 871 824 gefertigt, wobei mit einem Betätigungselement des Verschlusses in die Hinterschneidungen greifende Verriegelungshaken des Verschlusses zurückgezogen und damit das Tragprofil an das Eckelement angezogen werden kann. Der aufwendigere Aufbau dieser Verriegelung, die auch die beiden Elemente in Längsrichtung aufeinander auf Stoss verriegelt, ermöglicht die rasche Verriegelung durch eine Drehung des Verschlussknopfes um weniger als eine volle Drehung, während die einfachere Hülsenlösung zumeist die Betätigung des Schraubenkopfes um mehrere volle Drehung erfordert.

Die freien Enden des Winkelverbinders können einstückig mit dem Eckelement verbunden sein, beispielsweise verschweisst.

Das Eckelement kann an den den beiden senkrecht zueinander stehenden Aussenseiten gegenüberstehenden Innenseiten Aufnahmeflächen vorsehen, Dazu sind dann zwei freie Endkörper vorgesehen, deren dem Eckelement gegenüberliegenden Endfläche für ein Aufsetzen auf der zugeordneten Aufnahmefläche ausgebildet ist. Dann sind zusätzlich Befestigungselemente vorgesehen, um das Eckelement mit den zugeordneten freien Endkörpern zu verbinden.

Vorteilhafterweise bilden dann die Aufnahmeflächen eine Vertiefung für eine formschlüssige Aufnahme der Endfläche.

Die an den beiden senkrecht zueinander stehenden Aussenseiten vorgesehenen Profilelemente bilden eine Profilwandfläche und einen mittigen Schlitz mit Hinterschneidungen, wobei die senkrecht zueinander stehenden Profilwandflächen an der Eckkante des Eckelementes zusammenlaufen. Somit sind die entsprechenden Endflächen in einem Eckelement integriert, was einfachere und robustere "Ecken" ermöglicht, die bei Bedarf und Beschädigungen einfacher ausgetauscht werden können als beim Stand der Technik.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: zeigt eine perspektivische Ansicht eines Profilverbinders nach einem ersten Ausführungsbeispiel der Erfindung;
- Fig. 2: zeigt eine perspektivische Ansicht des Profilverbinders nach Fig. 1 mit zwei Profilen, die teilweise geschnitten und teilweise in Explosionsansicht dargestellt sind;
- Fig. 3: zeigt eine perspektivische Ansicht eines Profilverbinders nach einem zweiten Ausführungsbeispiel der Erfindung;
- Fig. 4: zeigt eine perspektivische Ansicht des Profilverbinders nach Fig. 3 mit zwei Profilen, die teilweise geschnitten und teilweise in Explosionsansicht dargestellt sind;
- Fig. 5: zeigt eine perspektivische Ansicht eines Eckelementes eines Profilverbinders nach einem dritten Ausführungsbeispiel der Erfindung;
- Fig. 6: zeigt eine andere perspektivische Ansicht des Eckelementes nach Fig. 5;
- Fig. 7: zeigt eine perspektivische Ansicht eines ersten Ausführungsbeispiels eines Verbinderarms eines Profilverbinders nach einem dritten Ausführungsbeispiel der Erfindung;
- Fig. 8: zeigt eine andere perspektivische Ansicht des Verbinderarms nach Fig. 7;
- Fig. 9: zeigt eine perspektivische Ansicht eines zweiten Ausführungsbeispiels eines Verbinderarms eines Profilverbinders nach einem dritten Ausführungsbeispiel der Erfindung; und
- Fig. 10: zeigt eine andere perspektivische Ansicht des Verbinderarms nach Fig. 9.

### BESCHREIBUNG BEVORZUGTER AUSFÜHRUNGSFORMEN

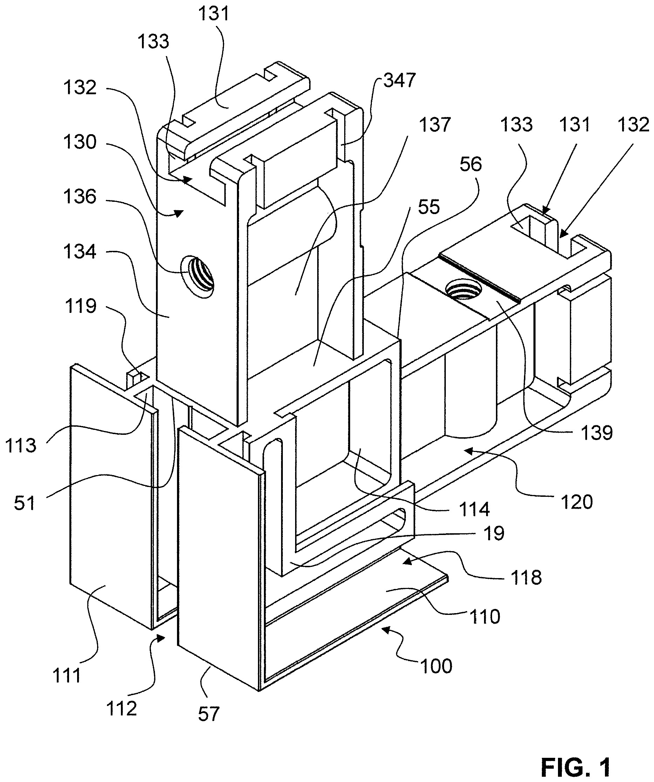

Die Fig. 1 zeigt eine perspektivische Ansicht eines Profilverbinders 100 nach einem ersten Ausführungsbeispiel der Erfindung.

Der Profilverbinder 100 besteht aus einem Eckelement 110, einem ersten Verbinderarm 120 und einem zweiten Verbinderarm 130. Diese Verbinderarme 120 und 130 sind im Ausführungsbeispiel der Fig. 1 einstückig mit dem Eckelement 110 verbunden und bilden seine freien Enden.

Das Eckelement 110 verfügt über Abschnitte von Profilwänden 111, die durch einen mittigen Profilschlitz 112 getrennt sind. Diese Profilwände 111 sind vertikal an der Ecke des Eckelements 110 zusammenstossend. Hinter dem Profilschlitz 112 sind seitliche Hinterschneidungen 113 vorgesehen, die vor der Schlitzrückwand 52 enden, die beim Eckelement Teil des Zentralkörpers 114 ist. Der Schlitz 112 wird mit Hinterschneidungen 113 dafür vorgesehen, von Verschlüssen in Eingriff genommen zu werden, um andere Profile oder weitere Bauelemente anzuflanschen. Von der Seite besteht unterhalb des Zentralkörpers 114 des Eckelements 110 ein Schlitz 118, der eine kleine Hinterschneidung 119 am Zentralkörper 114 hat. Gleichzeitig besteht eine weitere kleine Hinterschneidung an der gegenüberliegenden Seite dieses L-förmigen Profilvorsprungs 19, der seitlich aber hinter der Vorderkante bzw. Hinterkante der Profilwand 111 zurücksteht.

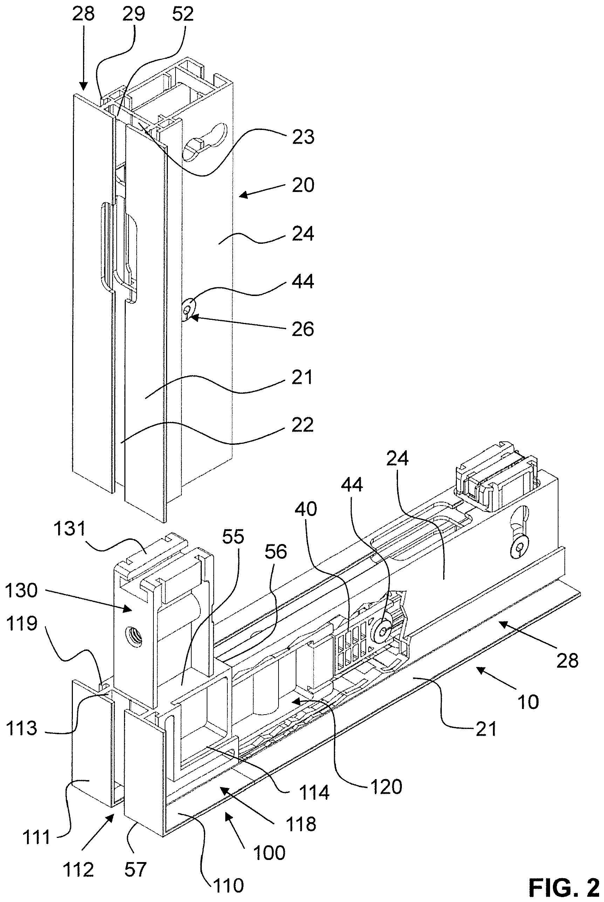

Wie erwähnt ist auf dem Eckelement 110 einstückig der zweite Verbinderarm 130 auf der Oberfläche 55 angesetzt. Der Verbinderarm 130 ist in Bezug auf die Schlitzrückwand 52 zurückversetzt ist, sodass eine Schulter 51 entsteht. Damit ist ein beim Tragprofil 20, wie es später im Zusammenhang mit der Fig. 2 beschrieben werden wird, ähnlich ausgestaltete Verbindung von Profilwand 21 und Schlitz 22 entsprechend auf diese Profilwand 111 und Schlitz 112 aufsetzbar. Der gegenüberliegende innerste Teil des Tragprofils 20 ist dabei nahe der Kante 56, vorzugsweise auf Stoss, angeordnet.

Der erste Verbinderarm 120 hat wie der zweite Verbinderarm 130 im Schnitt im Wesentlichen H-förmige Wände, nämlich zwei gegenüberliegende Seitenwände 134, die mittig durch die Mittelwand 137 verbunden sind. In der Mittelwand 137 ist eine Hülse vorgesehen, die ein durchgehendes Querschraubenloch 136 aufweist, welches auf der gegenüberliegenden Seite in einer Vertiefung 139 endet.

An dem dem Eckelement 110 gegenüberliegenden freien Ende ist ein Verschlussschlitz vorgesehen, der eine Endfläche 131 umfasst, die von einem diese Fläche teilenden Profilschlitz 132 getrennt wird, der sich hinter der Endfläche 131 in seitliche Hinterschneidungen 133 aufweitet.

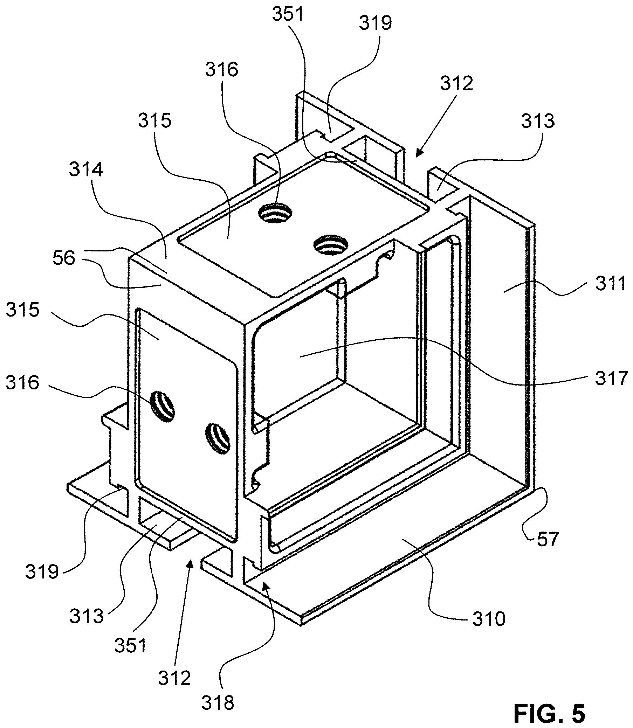

Wie aus der Fig. 1 erkennbar, ist der erste Verbinderarm 120, der vertikal zum zweiten Verbinderarm 130 ausgelegt ist, identisch zum zweiten Verbinderarm 130 aufgebaut, nur dass er auf der anderen freien inneren Seite des Eckelements 110 aufgesetzt ist und einstückig verbunden ist. Bei der Verbindung kann es sich um eine Klebung oder eine Verschweissung von den in Figs. 5 bis 10 gezeigten Einzelteilen handeln. Wesentlich ist, dass das in der Fig. 2 dargestellte Tragprofil 10 auf Stoss an der Kante 56 endet, so dass es dort gegebenenfalls das andere Tragprofil 20 gerade berührt. Der Übergang wird damit an dieser Kante realisiert, sofern die Tragprofile 10 und 20 in der Ecke nicht zurückstehen.

Die Fig. 2 beschreibt eine perspektivische Ansicht des Profilverbinders 100 nach Fig. 1 mit zwei Profilen, einem horizontalen Tragprofil 10 und einem vertikalen Tragprofil 20, die teilweise geschnitten und teilweise in Explosionsansicht dargestellt sind. Gleiche Merkmale werden in allen Zeichnungen mit gleichen Bezugszeichen bezeichnet. Ähnliche Merkmale insbesondere aus vergleichbaren Ausführungsbeispielen werden mit ähnlichen Bezugszeichen versehen, die auf eine funktionale Ähnlichkeit hinweisen.

Es wird auf die Schulter 51 am zweiten Verbinderarm 130 hingewiesen, wobei beim Aufschieben des vertikalen Profils 20 auf den zweiten Verbinderarm 130 eine für den zweiten Verbinderarm 130 vorgesehene Öffnung in dem vertikalen Profil 20 vorgesehen ist, wobei sich die Schlitzrückwand 52 direkt vor die Vorderwand des zweiten Verbinderarms 130 schiebt, insbesondere in einem Formschluss mit den anderen ihn umschliessenden Bestandteilen.

Dabei werden auch die Profilwand 21 und der mittige Profilschlitz 22 auf Stoss mit den entsprechenden Profilwänden 111 und Profilschlitzen 112 des Eckelements 130 in direkten Anschlagkontakt gebracht, so dass für die Funktionalität des Tragprofils 20 diese übergangslos in das Eckelement 130 übergeht und bis zu dessen Ende übernommen wird.

Unter Hinweis auf das horizontale Tragprofil 10 wird auf die dort vorgenommene teilweise geschnittene Ansicht Bezug genommen, das ansonsten dieselben Elemente wie das vertikale Profil 20 aufweist. Insbesondere ist eine Querbohrung 26 durch den Zentralkörper 24 vorgesehen, in dem ein Verschlussexzenterkopf 44 bündig eingesetzt ist oder leicht herausragt.

Der Verschluss 40 mit dem zu betätigenden Verschlussexzenterkopf 44 kann einer der vielen aus dem Stand der Technik bekannten Verschlüsse sein, insbesondere ein Verschluss der Anmelderin, der nach EP 0 871 824 gefertigt ist. Diese Verschlüsse verfügen über Sperrklinken, die durch Drehen des Exzenterverschlusskopfes in den Schlitz 132 eingeschoben und sich in der Hinterschneidung 133 verhaken und durch ein leichtes Zurückziehen dieser Hakenelemente zugleich den Verbinderarm 130 in Richtung des zu befestigenden Profils ziehen.

Bei dem Ausführungsbeispiel des Einsatzes des Verbinderarms 100 nach Fig. 1 werden die beiden Profile 10 und 20 mit ihren komplementären Öffnungen im Zentralkörper 24 auf die freien Enden der ersten und zweiten Verbinderarme 120, 130 aufgesetzt und vorgeschoben, bis die Verriegelungselemente der in den Profilen 10 und 20 eingesetzten Verschlüssen 40 in den Schlitzen 132 zu liegen kommen. Dann wird durch Betätigen des Exzenterknopfes 44 um eine durch die Art des Verschlusses vorgegebene Drehung der Verschluss in dem Schlitz 132 verriegelt, sodass das jeweilige Tragprofil mit dem L-förmigen Eckverbinder 100 fest verbunden ist.

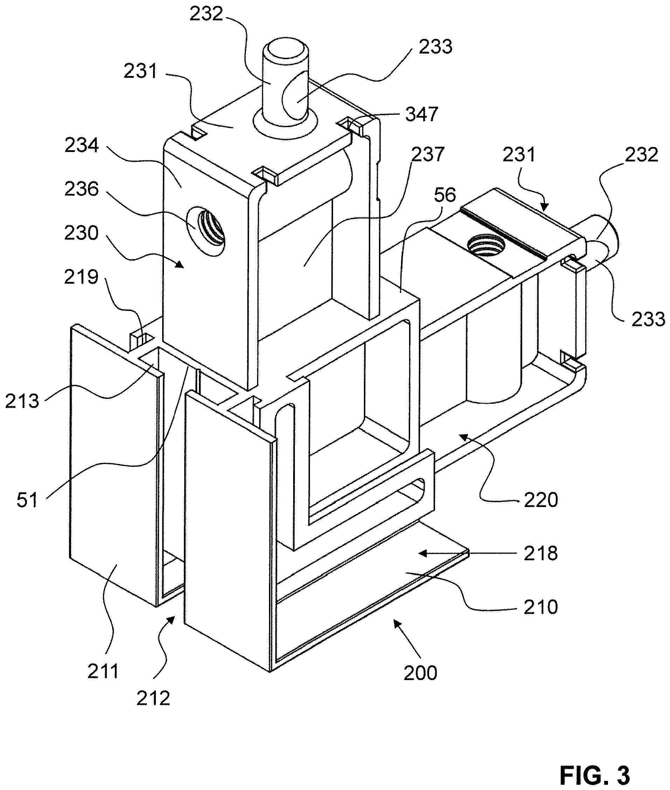

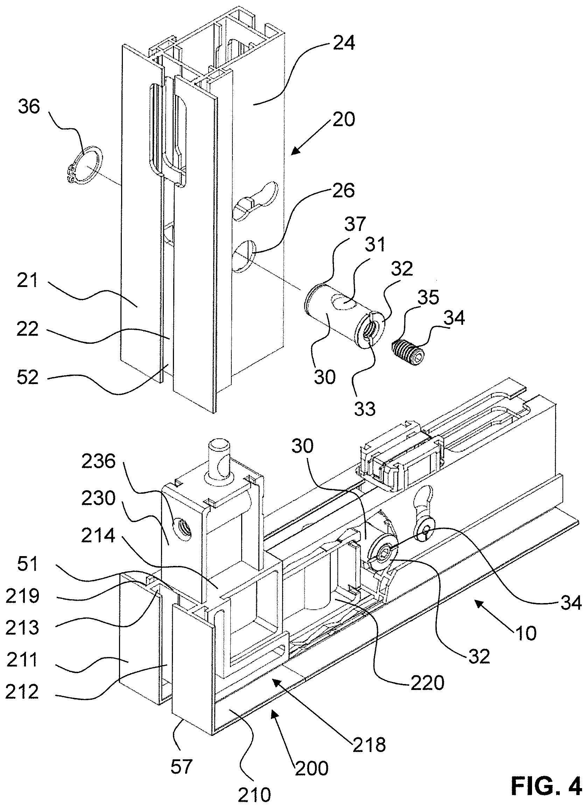

Die Fig. 3 zeigt nun eine perspektivische Ansicht des Profilverbinders 200 nach einem zweiten Ausführungsbeispiel der Erfindung und in der Fig. 4 ist eine perspektivische Ansicht des Profilverbinders 200 nach Fig. 3 mit zwei Profilen 10 und 20 ähnlich wie in der Fig. 2 dargestellt, d.h. die ebenfalls teilweise geschnitten und teilweise in Explosionsansicht vorliegen. Der Profilverbinder 200 verfügt im Eckelement 210 über die gleichen Merkmale wie das Eckelement 110 des ersten Ausführungsbeispiels. In gleicher Weise sind die zwei Verbinderarme 220 und 230 einstückig mit dem Eckelement 210 verbunden. Auch diese weisen im Querschnitt einen H-Förmigen Zentralkörper auf mit zwei gegenüberliegenden Seiten 234 und einer Mittelwand 237.

Der wesentliche Unterschied liegt in der Ausgestaltung der Endfläche 231, aus der hier jeweils ein Bolzen oder Stift 232 herausragt, der auf einer Seite eine konische Vertiefung 233 hat. Diese konische Vertiefung 233 ist quer zur Anordnung des L-förmigen Schlitzes 212 ausgerichtet, also insbesondere auch quer zur Achse des Querschraubenlochs 236. Für die Befestigung der Profile 10 und 20 ist hier in der Querbohrung 26 in den einzusetzenden Profilen 10 und 20 jeweils eine Hülse 30 einsetzbar, die an ihrem einen Ende über eine Nut 37 verfügt, auf die ein Sprengring 36 aufgesetzt werden kann, der auf der gegenüberliegenden Seite des Zentralkörpers 24 des Tragprofils 10, 20 angeordnet ist. Auf der hier in Zeichnungsrichtung vorderen Seite ist ein Flansch 32 mit einem quer vorgesehenen Justierschlitz 33 angeordnet. Der Justierschlitz 33 ist parallel zur Achse der Bohrung 31 in der Hülse 30 vorgesehen. Wenn jetzt die Hülse 30 durch die Bohrung 26 vorgeschoben wird, kann mit der Position des Justierschlitzes 33 sichergestellt werden, dass die Bohrung 31 im Falle des vertikalen Profils 20 vertikal ausgerichtet ist, so dass der Bolzen 232 durch diese Querbohrung hindurch stossen kann. Dabei kommt die Vertiefung 233 ungefähr in der Höhe der Innenbohrung der Hülse 30 zu liegen, so dass das zweite Profil 20 an dem Profilverbinder 200 durch das Einschrauben der Inbusschraube 34 befestigt werden kann. Dabei agiert die konische Verjüngung 35 an der einzuschraubenden Spitze des Inbusschraubenkopfes 34 als Zentrierelement in der Vertiefung 233.

Dieselbe Vorgehensweise zur Befestigung wird für das horizontale Profil 10 verwendet.

Es ist klar, dass, auch wenn das Ausführungsbeispiel nicht bildlich dargestellt worden ist, es möglich ist, einen L-förmigen Winkelverbinder anzugeben, bei dem einstückig an einem Eckelement 110 / 210 auf der einen Seite ein Bolzenverbinder 220 oder 230 vorgesehen ist und an der anderen Seite und an dem anderen freien Ende ein Verschlussverbinder 120 oder 130. Damit kann insbesondere eine Vorfixierung der Profile 10 und 20 dahingehend erreicht werden, dass an den beiden gegenüberliegenden freien Enden eines ersten Tragprofils die Bolzenverbindungsenden 220, 230 in die Zentralkörper des Profils 20 eingeschoben werden und durch entsprechende Schraubendrehungen der Inbusschrauben 34 angezogen werden. Diese Verbinder sind technisch einfacher, bestehen nur aus einer Hülse 30, einem Sprengring 36 und einer Inbusschraube 34, so dass dann senkrecht aus den Profilen 20 an den beiden freien Enden des Profils 20 Verbinderarme herausragen, die über Verschlussenden verfügen. Dann können an den beiden gegenüberliegenden Seiten die Profile 10 mit eingebauten Verschlüssen 40 auf Anschlag vorgeschoben werden, sodass durch eine geringe Drehung des Exzenterverschlusskopfes 44 diese Profile 10 gegen die Eckelemente angezogen werden können.

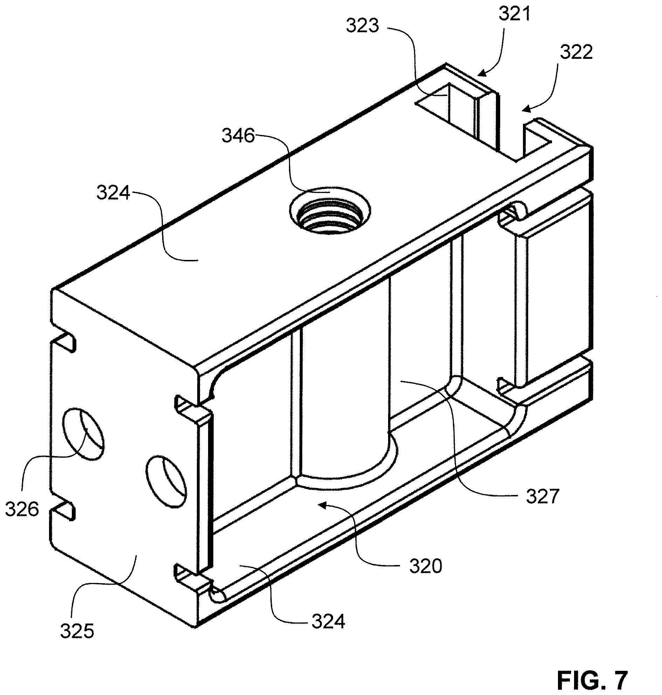

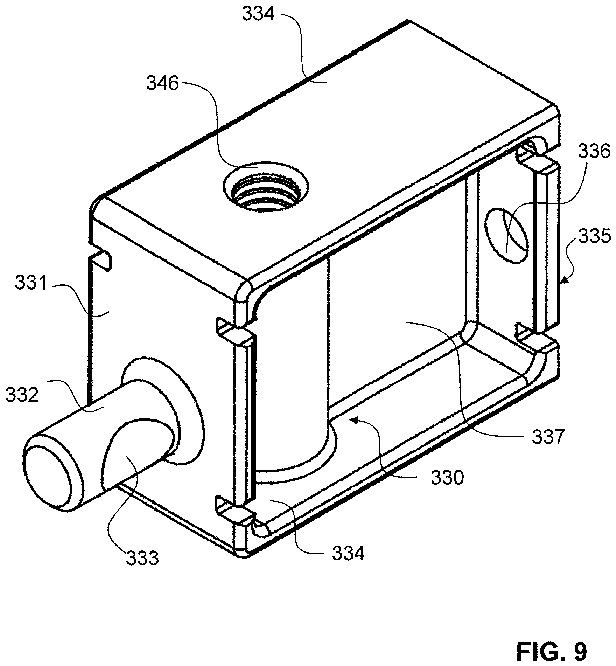

Die Fig. 5 zeigt eine perspektivische Ansicht des Eckelements 310 eines Profilverbinders nach einem dritten Ausführungsbespiel der Erfindung. Dieses Eckelement 310 ist zusammen mit Verbinderarmen einzusetzen, die die freien Enden nach den Fig. 1 bis 4 bereitstellen. Insbesondere können die Verbinderarme nach Figs. 7 oder 9 vorgesehen werden. Die Profilwand 311 ist L-förmig um zwei Seiten des Zentralkörpers 314 des Eckverbinders 310 herumgeführt, wobei diese Profilwand 311 mittig von dem Profilschlitz 312 mit den Hinterschneidungen 313 getrennt wird. Die Schlitze 312 enden an den Seitenwänden des Eckelements 310, in denen vorteilhafterweise Aufnahmevertiefungen 315 vorgesehen sind. Diese sind in Richtung des Profilschlitzes 312 auf den Seitenwänden so angeordnet, dass eine Kantenfläche 351 gegenüber dem Profilschlitz 312 stehen bleibt. Gegen diese Kantenfläche 351 stösst dann eine Rückwand des Zentralkörpers 24 des aufzusetzenden Profils 10 oder 20.

Wie bei den vorherigen Ausführungsbeispielen der Eckverbinder gibt es einen seitlichen Schlitz 318 mit einer Hinterschneidung 319, und der Zentralkörper 314 weist im Querschnitt (beispielsweise in einer durch die einen oder die anderen Schraubenlöcher 316 ausgerichteten Ebene) jeweils eine H-Form auf, da in der Mitte zwischen den Seitenwänden eine Mittelwand 317 eingezogen ist. Vorteilhafterweise sind mittig in der Aufnahmevertiefung 315 zwei Schraubenlöcher 316 hier nebeneinander quer angeordnet. In anderen Ausführungsbeispielen können diese Löcher auch längs angeordnet sein. Im Allgemeinen sind zwei Löcher vorgesehen.

Die Ränder der Aufnahmevertiefungen 315, inklusive der Kantenfläche 351, legen zugleich vorteilhafterweise die Dimensionen der Ausnehmung in den Tragprofilen 10 und 20 fest, mit denen die freien Enden des Eckverbinders von den Wänden der Tragprofile 10 und 20 umfasst werden.

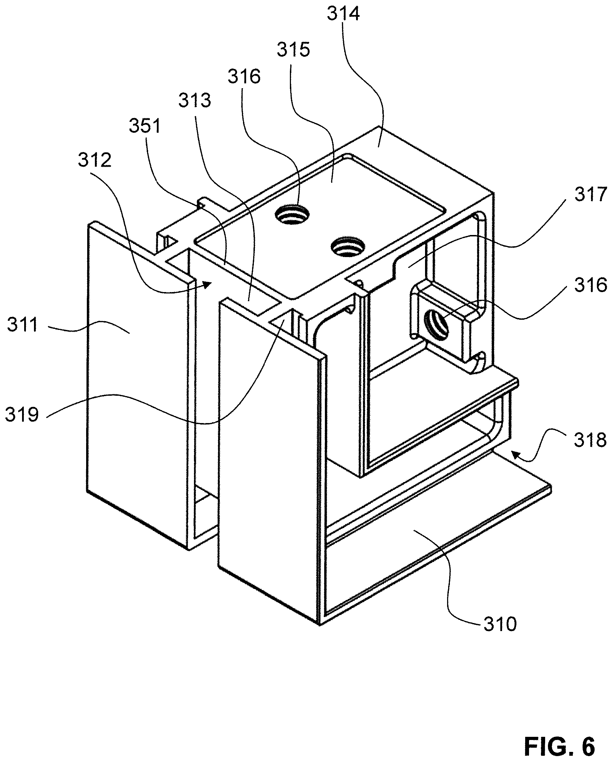

Die Fig. 6 zeigt eine andere perspektivische Ansicht des Eckelements 310 nach Fig. 5, bei der zu erkennen ist, dass das Schraubenloch 316 gegenüber dem Innenraum der Innenseite des Körpers 314 eine Verstärkung für einen längeren Eingriff einer einzusetzenden Schraube hat. Es ist nur ein Schraubenloch 316 zu sehen, da der Innenhohlraum durch die Mittelwand 317 getrennt wird.

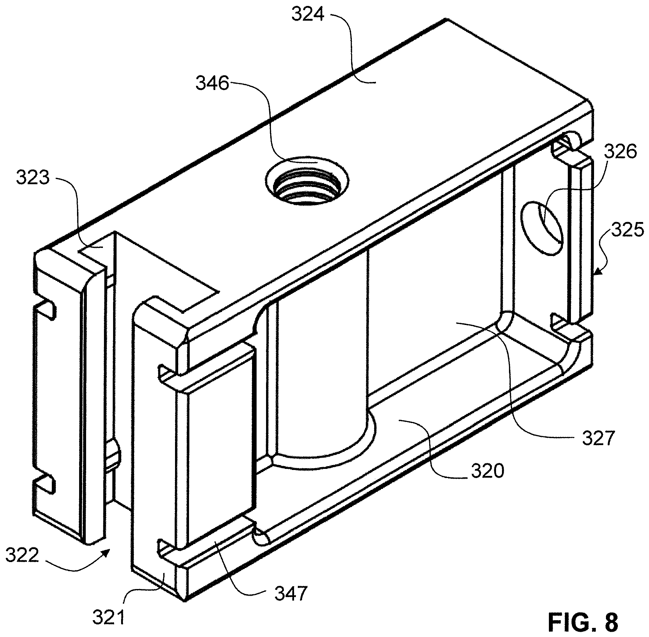

Die Fig. 7 zeigt dann eine perspektivische Ansicht eines ersten Ausführungsbeispiels eines Verbinderarms 320 eines Profilverbinders nach einem dritten Ausführungsbeispiel der Erfindung, welches in Zusammenhang mit dem Eckelement 310 verwendet werden kann. Die Fig. 8 zeigt dazu eine andere perspektivische Ansicht des Verbinderarms 320 nach Fig. 7. Der Verbinderarm 320 ist in seiner Aussenform quaderförmig. Dabei wird die eine Endfläche an den Enden der grösseren Seitenlänge als Aufsetzfläche 325 in die Aufnahmevertiefung 315 eingesetzt, wobei die beiden Durchgangslöcher 326 in dem Verbinderarm 320 gegenüber den Schraubenlöchern 316 des Eckelementes 310 zum Liegen kommen. Somit können beidseitig der mittigen Zwischenwand 327 jeweils Schrauben durch die Bohrung 326 eingesetzt werden, so dass der Verbinderarm 320 für den Einsatz eines Verschluss an dem Eckelement 310 verbunden werden kann.

Die beiden gegenüberliegenden Seitenflächen 324 sind einerseits mit der Zwischenwand 327 verbunden und andererseits über eine Hülse, in der die Bohrung 346 vorgesehen ist. Wie beim Ausführungsbeispiel nach den ersten Figuren ist auf der gegenüberliegenden Seite der Aufsetzfläche 325, also gegenüber der Richtung des Eckelements 310, eine Profilwand 321 vorgesehen, zwischen denen sich ein Profilschlitz 322 erstreckt, welcher sich mit einer Hinterschneidung 323 vergrössert. Profilschlitz 322 und Schraubenloch 346 sind parallel zueinander ausgerichtet. Das freie Ende des Elementes ist dann entsprechend mit einem Verschluss 40, der in einem Profil 10 oder 20 vorgesehen ist, zu verbinden.

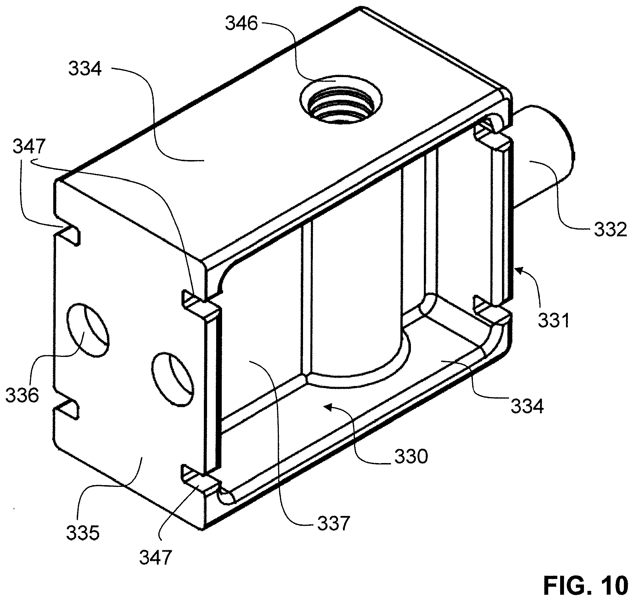

Die Fig. 9 zeigt eine perspektivische Ansicht eines Ausführungsbeispiels eines Verbinderarms 330 eines Profilverbinders nach einem dritten Ausführungsbeispiel der Erfindung, wobei die Aufsetzfläche 335 wiederum dafür vorgesehen ist, in die Aufnahmevertiefung 315 eingesetzt zu werden, sodass durch die Bohrung 336 eine Schraube in das Eckelement 310 zur Fixierung des Verbinders 330 eingesetzt werden kann. Fig. 10 zeigt eine andere perspektivische Ansicht des Verbinderarms nach Fig. 9. Auch hier liegen die beiden Seitenwände 334 getrennt von einer Hülse mit einer Bohrung 346 auseinander. Auf der der Fläche 335 gegenüberliegenden Fläche der Profilwand 331 ist der Stift 332 angesetzt, in dem quer verlaufend auf dem Aussenmantel des Stifts 332 die Vertiefung 333 angeordnet ist.

Alle freien Endverbinder 320, 330 weisen in den gegenüberliegenden Endflächen, hier 331 und 335 auf das Ausführungsbeispiel von Fig. 9 und 10 bezogen, vier in Längsrichtung des Quaders miteinander fluchtende Nuten oder Schlitze 347 auf. Bei den einstückigen Eckverbindern 120, 130, 220, 230 sind die Schlitze 347 nur an den freien Endflächen 131, 231 vorgesehen. Diese Schlitze 347 können als Führung dienen, wenn in diesen entsprechende Rippen der Tragprofilen 10, 20 verlaufen.

**BEZUGSZEICHENLISTE**

| | | | |
|---|---|---|---|
| 10 | horizontales Profil | 44 | Verschlussexzenterkopf |
| 19 | Profilvorsprung | 51 | Schulter |
| 20 | vertikales Profil | 52 | Schlitzrückwand |
| 21 | Profilwand | 55 | Oberfläche |
| 22 | Profilschlitz | 56 | Innenkante |
| 23 | Hinterschneidung | 57 | Eckkante |
| 24 | Zentralkörper | 100 | Profilverbinder |
| 26 | Querbohrung | 110 | Eckelement |
| 28 | Profilschlitz | 111 | Profilwand |
| 29 | Hinterschneidung | 112 | Profilschlitz |
| 30 | Hülse | 113 | Hinterschneidung |
| 31 | Bohrung | 114 | Zentralkörper |
| 32 | Flansch | 115 | Aufnahmevertiefung |
| 33 | Justierschlitz | 116 | Schraubenloch |
| 34 | Inbusschraube | 117 | Mittelwand |
| 35 | konisches Ende | 118 | Profilschlitz |
| 36 | Sprengring | 119 | Hinterschneidung |
| 37 | Nut | 120 | erster Verbinderarm |
| 40 | Verschluss | 130 | zweiter Verbinderarm |
| 131 | Endfläche | 312 | Profilschlitz |
| 132 | Profilschlitz | 313 | Hinterschneidung |
| 133 | Hinterschneidung | 314 | Zentralkörper |
| 134 | Seitenwand | 315 | Aufnahmevertiefung |
| 136 | Querschraubenloch | 316 | Schraubenloch |
| 137 | Mittelwand | 317 | Mittelwand |
| 139 | Vertiefung | 318 | Profilschlitz |
| 200 | Profilverbinder | 319 | Hinterschneidung |
| 210 | Eckelement | 320 | Verbinderarm für Verschluss |
| 211 | Profilwand | 321 | Profilwand |
| 212 | Profilschlitz | 322 | Profilschlitz |
| 213 | Hinterschneidung | 323 | Hinterschneidung |
| 214 | Zentralkörper | 324 | Zentralkörper |
| 215 | Aufnahmevertiefung | 325 | Aufsetzfläche |
| 216 | Schraubenloch | 326 | Bohrung |
| 217 | Mittelwand | 327 | Mittelwand |
| 218 | Profilschlitz | 330 | Verbinderarm für |
| 219 | Hinterschneidung | | Schraubenverriegelung |
| 220 | erster Verbinderarm | 331 | Profilwand |
| 230 | zweiter Verbinderarm | 332 | Bolzen |
| 231 | Endfläche | 333 | Vertiefung |
| 232 | Bolzen | 334 | Zentralkörper |
| 233 | Vertiefung | 335 | Aufsetzfläche |
| 234 | Seitenwand | 336 | Bohrung |
| 236 | Querschraubenloch | 337 | Mittelwand |
| 237 | Mittelwand | 346 | Schraubenbohrung |
| 310 | Eckelement | 347 | Schlitz |
| 311 | Profilwand | 351 | Kantenfläche |

## Patentansprüche

1. Kombination von einem Winkelverbinder (100; 200; 310, 320, 330) mit einem ersten Tragprofil (10) und mit einem zweiten Tragprofil (20) zum Verbinden des ersten Tragprofils (10), welches einen ersten Hohlraum, eine erste äussere Seitenfläche (21) und ein erstes aktives Befestigungselement (30, 34, 40, 44) aufweist, mit dem zweiten Tragprofil (20), welches einen zweiten Hohlraum, eine zweite äussere Seitenfläche und ein zweites aktives Befestigungselement (30, 34, 40, 44) aufweist, wobei die erste äussere Seitenfläche (21) des ersten Tragprofils (10) und die zweite äussere Seitenfläche des zweiten Tragprofils (20) jeweils einen zentralen in Längsrichtung der jeweiligen Seitenfläche des jeweiligen Tragprofils (10, 20) ausgerichteten Schlitz (22) aufweisen, wobei der Winkelverbinder versehen ist: mit einem Eckelement (110; 210, 310) mit einer ersten Endfläche (55, 56) und einer zweiten Endfläche (55, 56), die senkrecht zueinander ausgerichtet sind, mit einem ersten freien Ende (120;220;320), das sich über die erste Endfläche (55, 56) hinaus erstreckt, die in den ersten Hohlraum des ersten Tragprofils (10) einsetzbar ist, mit einem zweiten freien Ende (130; 230; 330), das sich über die zweite Endfläche (55, 56) hinaus erstreckt, die in den zweiten Hohlraum des zweiten Tragprofils (20) einsetzbar ist, wobei das erste freie Ende (120; 220; 320) senkrecht zum zweiten freien Ende (130; 230; 330) ausgerichtet ist; wobei das erste freie Ende (120; 220; 320) des Winkelverbinders ein erstes passives Fixierungsmittel (131, 132, 133; 231, 232, 233; 321, 332, 323; 331, 332, 333) aufweist, wobei das zweite freie Ende (130; 230; 330) des Winkelverbinders ein zweites passives Fixierungsmittel (131, 132, 133; 231, 232, 233; 321, 332, 323; 331, 332, 333) aufweist, wobei das erste freie Ende des Winkelverbinders über das komplementäre aktive Befestigungselement (30, 34; 40, 44) lösbar mit dem zugehörigen ersten Tragprofil (10) verbindbar ist, wobei das zweite Ende des Winkelverbinders über das komplementäre zweite aktive Befestigungselement (30, 34; 40, 44) lösbar mit dem zugehörigen zweiten Tragprofil (20) verbindbar ist, wobei das Eckelement (110; 210; 310) ein erstes und ein zweites Profilelement (111, 112; 211, 212; 311, 312) mit einem zentralen Schlitz (112; 212; 312) umfasst, wobei die ersten und zweiten Profilelemente an zwei senkrecht zueinander stehenden Aussenseiten des Eckelements vorgesehen sind, wobei die zentralen Schlitze (112; 212; 312) der Profilelemente (111, 112; 211, 212; 311, 312) jeweils in den zentralen Schlitzen (22) der Tragprofile (10, 20) kompatibel weitergeführt sind, und wobei die ersten und zweiten Profilelemente (111, 112; 211, 212; 311, 312) des Winkelverbinders von der Ecke (57), in der sie sich treffen, bis zur Höhe der zugehörigen ersten bzw. zweiten Endfläche (55, 56) des Eckelementes (110; 210; 310) reichen.

2. Kombination nach Anspruch 1, **dadurch gekennzeichnet, dass** die freien Enden des Winkelverbinders im über das Eckelement (110; 210; 310) überstehenden Teil einen in der Aussenform quaderförmigen Körper für eine formschlüssige Aufnahme in eine komplementäre Ausnehmung in dem zugeordneten freien Ende des Tragprofils (10, 20) aufweisen.

3. Kombination nach Anspruch 2, **dadurch gekennzeichnet, dass** mindestens ein freies Ende des Winkelverbinders ein passives Fixierungsmittel (231, 232, 233; 331, 332, 333) in Gestalt eines über den quaderförmigen Körper hinaus (231;331) herausragenden Bolzen (232;332) bildet, der im Zylindermantel eine konusförmige Vertiefung (233;333) aufweist, wobei dem Bolzen (232;332) eine Hülse (30) mit Querbohrung (31) zur Aufnahme des Bolzens (232;332) und einem Innengewinde an einem freien Ende der Hülse (30) für einen Einsatz der Hülse (30) in dem Tragprofil zugeordnet ist, wobei mit einer in das Innengewinde einschraubbaren Verriegelungsschraube (34) mit konusförmigen Ende (35) das Tragprofil an das Eckelement (110; 210; 310) angezogen werden kann.

4. Kombination nach Anspruch 2, **dadurch gekennzeichnet, dass** mindestens ein freies Ende des Winkelverbinders ein passives Fixierungsmittel (131, 132, 133; 321, 322, 323) in Gestalt eines im quaderförmigen Körper (131;321) ausgebildeten Verschlussschlitz (132;322) mit Hinterschneidungen (133;323) bildet, dem ein in dem zugeordneten Tragprofil angeordneter Verschluss (40) zugeordnet ist, wobei mit einem Betätigungselement (44) des Verschlusses (40) in die Hinterschneidungen (133;323) greifende Verriegelungshaken des Verschlusses (40) zurückgezogen und damit das Tragprofil an das Eckelement (110; 210; 310) angezogen werden kann.

5. Kombination nach einem der Ansprüche 1 bis 4, **dadurch gekennzeichnet, dass** die freien Enden (120, 130; 220, 230) des Winkelverbinders einstückig mit dem Eckelement (110, 210) verbunden sind.

6. Kombination nach einem der Ansprüche 2 bis 4, **dadurch gekennzeichnet, dass** das Eckelement (310) an den den beiden senkrecht zueinander stehenden Aussenseiten gegenüberstehenden Innenseiten Aufnahmeflächen (315) vorgesehen sind, dass zwei freie Endkörper (320, 330) vorgesehen sind, deren dem Eckelement (310) gegenüberliegende Endfläche (325, 335) für ein Aufsetzen auf der zugeordneten Aufnahmefläche (315) ausgebildet ist, und dass Befestigungselemente (316; 326, 336) vorgesehen sind, um das Eckelement (310) mit den zugeordneten freien Endkörpern (320, 330) zu verbinden.

7. Kombination nach Anspruch 6, **dadurch gekennzeichnet, dass** die Aufnahmeflächen (315) eine Vertiefung für eine formschlüssige Aufnahme der Endfläche (325, 335) bilden.

8. Kombination nach einem der Ansprüche 1 bis 7, **dadurch gekennzeichnet, dass** die an den beiden senkrecht zueinander stehenden Aussenseiten vorgesehenen Profilelemente (111, 112; 211, 212) eine Profilwandfläche (111; 211) und einen mittigen Schlitz (112; 212) mit Hinterschneidungen (113; 213) aufweisen, wobei die senkrecht zueinander stehenden Profilwandflächen (111; 211) an der Eckkante (57) des Eckelementes (110; 210) zusammenlaufen.

## Claims

1. A combination of an angle connector (100; 200; 310, 320, 330) with a first support profile (10) and with a second support profile (20) for connecting the first support profile (10), which has a first cavity, a first outer side surface (21) and a first active fastening element (30, 34, 40, 44), to the second support profile (20), which has a second cavity, a second outer side surface and a second active fastening element (30, 34, 40, 44), the first outer side surface (21) of the first support profile (10) and the second outer side surface of the second support profile (20) each having a central slot (22) aligned in the longitudinal direction of the respective side surface of the respective support profile (10, 20), the angle connector being provided with a corner element (110; 210, 310) having a first end face (55, 56) and a second end face (55, 56) which are aligned perpendicular to one another, with a first free end (120;220; 320) extending beyond the first end face (55, 56) insertable into the first cavity of the first support profile (10), with a second free end (130; 230; 330) extending beyond the second end face (55, 56) insertable into the second cavity of the second support profile (20), wherein the first free end (120; 220; 320) is perpendicular to the second end face (55, 56); 220; 320) being oriented perpendicular to the second free end (130; 230; 330); the first free end (120; 220; 320) of the angle connector having a first passive fixing means (131, 132, 133; 231, 232, 233; 321, 332, 323; 331, 332, 333), the second free end (130; 230; 330) of the angle connector has a second passive fixing means (131, 132, 133; 231, 232, 233; 321, 332, 323; 331, 332, 333), the first free end of the angle connector being releasably connected to the complementary active fixing element (30, 34; 40, 44) to the associated first support profile (10), the second end of the angle connector being releasably connectable to the associated second support profile (20) via the complementary second active fastening element (30, 34; 40, 44), wherein the corner element (110; 210; 310) comprises a first and a second profile element (111, 112; 211, 212; 311, 312) having a central slot (112; 212; 312), the first and second profile elements being provided on two mutually perpendicular outer sides of the corner element, the central slots (112; 212; 312) of the profile elements (111, 112; 211, 212; 311, 312) each being compatibly continued in the central slots (22) of the supporting profiles (10, 20), and the first and second profile elements (111, 112; 211, 212; 311, 312) of the angle connector being extended from the corner (57) in which they meet to the height of the associated first and second end face (55, 56), respectively, of the corner element (110; 210; 310).

2. The combination according to claim 1, **characterized in that** the free ends of the angle connector have, in the part projecting beyond the corner element (110; 210; 310), a body with a cuboid outer form for form-fitting reception in a complementary recess in the associated free end of the supporting profile (10, 20).

3. The combination according to claim 2, **characterized in that** at least one free end of the angle connector forms a passive fixing means (231, 232, 233; 331, 332, 333) in the form of a bolt (232; 332) projecting beyond the parallelepipedal body (231; 331) and having a conical recess (233; 333) in the cylinder jacket, wherein the bolt (232; 332) is associated with a sleeve (30) having a transverse bore (31) for receiving the bolt (232; 332) and an internal thread at a free end of the sleeve (30) for insertion of the sleeve (30) in the supporting profile, wherein the supporting profile can be tightened to the corner element (110; 210; 310) by means of a locking screw (34) with a conical end (35) which can be screwed into the internal thread.

4. The combination according to claim 2, **characterized in that** at least one free end of the angle connector forms a passive fixing means (131, 132, 133; 321, 322, 323) in the form of a locking slot (132; 322) with undercuts (133; 323), with which a lock (40) arranged in the associated supporting profile is associated, wherein locking hooks of the lock (40) engaging in the undercuts (133; 323) can be retracted with an actuating element (44) of the lock (40) and thus the supporting profile can be attracted to the corner element (110; 210; 310).

5. The combination according to any one of claims 1 to 4, **characterized in that** the free ends (120, 130; 220, 230) of the angle connector are integrally connected to the corner element (110, 210).

6. The combination according to any one of claims 2 to 4, **characterized in that** the corner element (310) is provided with receiving surfaces (315) on the inner sides opposite the two outer sides perpendicular to each other, **in that** two free end bodies (320, 330) are provided whose end surface (325, 335) opposite the corner element (310) is designed to be placed on the associated receiving surface (315), and **in that** fastening elements (316; 326, 336) are provided in order to connect the corner element (310) to the associated free end bodies (320, 330).

7. The combination according to claim 6, **characterized in that** the receiving surfaces (315) form a recess for positive reception of the end surface (325, 335).

8. The combination according to any one of claims 1 to 7, **characterized in that** the profile elements (111, 112; 211, 212) provided on the two mutually perpendicular outer sides have a profile wall surface (111; 211) and a central slot (112; 212) with undercuts (113; 213), the mutually perpendicular profile wall surfaces (111; 211) coming together at the corner edge (57) of the corner element (110; 210).

## Revendications

1. Combinaison d'un connecteur angulaire (100 ; 200 ; 310, 320, 330) avec un premier profilé de support (10) et avec un second profilé de support (20) pour connecter le premier profilé de support (10), qui a une première cavité, une première surface latérale extérieure (21) et un premier élément de fixation actif (30, 34, 40, 44), au second profilé de support (20), qui a une seconde cavité, une seconde surface latérale extérieure et un second élément de fixation actif (30, 34, 40, 44), la première surface latérale extérieure (21) du premier profilé de support (10) et la deuxième surface latérale extérieure du deuxième profilé de support (20) présentant chacune une fente centrale (22) orientée dans la direction longitudinale de la surface latérale respective du profilé de support respectif (10, 20), le connecteur angulaire étant pourvu : d'un élément d'angle (110 ; 210, 310) avec une première surface d'extrémité (55, 56) et une deuxième surface d'extrémité (55, 56) qui sont orientées perpendiculairement l'une à l'autre, avec une première extrémité libre (120 ; 220 ; 320) qui s'étend au-delà de la première surface d'extrémité (55, 56), qui peut être insérée dans la première cavité du premier profilé de support (10), avec une deuxième extrémité libre (130 ; 230 ; 330) qui s'étend au-delà de la deuxième surface d'extrémité (55, 56), qui peut être insérée dans la deuxième cavité du deuxième profilé de support (20), où la première extrémité libre (120 ; 220 ; 320) est orientée perpendiculairement à la deuxième extrémité libre (130 ; 230 ; 330) ; où la première extrémité libre (120 ; 220 ; 320) du connecteur angulaire comprenant un premier moyen de fixation passif (131, 132, 133 ; 231, 232, 233 ; 321, 332, 323 ; 331, 332, 333), où la deuxième extrémité libre (130 ; 230 ; 330) du connecteur angulaire comprend un deuxième moyen de fixation passif (131, 132, 133 ; 231, 232, 233 ; 321, 332, 323 ; 331, 332, 333), où la première extrémité libre du connecteur angulaire peut être reliée de manière amovible au premier profilé de support (10) correspondant par le l'élément de fixation actif complémentaire (30, 34 ; 40, 44), où la deuxième extrémité du connecteur angulaire peut être reliée de manière amovible au deuxième profilé de support (20) correspondant par le deuxième élément de fixation actif complémentaire (30, 34 ; 40, 44), où l'élément d'angle (110 ; 210 ; 310) comprend un premier et un deuxième élément de profilé (111, 112 ; 211, 212 ; 311, 312) avec une fente centrale (112 ; 212 ; 312), les premier et deuxième éléments profilés étant prévus sur deux côtés extérieurs perpendiculaires l'un à l'autre de l'élément d'angle, les fentes centrales (112 ; 212 ; 312) des éléments profilés (111, 112 ; 211, 212 ; 311, 312) se poursuivant respectivement de manière compatible dans les fentes centrales (22) des profilés de support (10, 20), et les premier et deuxième éléments de profilé (111, 112 ; 211, 212 ; 311, 312) du connecteur angulaire s'étendant depuis l'angle (57) dans lequel ils se rencontrent jusqu'à la hauteur de la première ou de la deuxième surface d'extrémité (55, 56) de l'élément d'angle (110 ; 210 ; 310), respectivement.

2. Combinaison selon la revendication 1, **caractérisée en ce que** les extrémités libres du connecteur angulaire présentent, dans la partie dépassant de l'élément d'angle (110 ; 210 ; 310), un corps de forme parallélépipédique dans la forme extérieure pour un logement par complémentarité de forme dans un évidement complémentaire dans l'extrémité libre associée du profilé porteur (10, 20).

3. Combinaison selon la revendication 2, **caractérisée en ce qu'**au moins une extrémité libre du connecteur angulaire forme un moyen de fixation passif (231, 232, 233 ; 331, 332, 333) sous la forme d'un boulon (232 ; 332) dépassant du corps parallélépipédique (231 ; 331), qui présente un creux conique (233 ; 333) dans l'enveloppe cylindrique, où le boulon (232 ; 332) est associée à une douille (30) avec un perçage transversal (31) pour recevoir le boulon (232 ; 332) et un taraudage à une extrémité libre de la douille (30) pour une mise en place de la douille (30) dans le profilé de support, une vis de verrouillage (34) avec une extrémité conique (35) pouvant être vissée dans le taraudage permettant de serrer le profilé de support contre l'élément d'angle (110 ; 210 ; 310).

4. Combinaison selon la revendication 2, **caractérisée en ce qu'**au moins une extrémité libre du connecteur angulaire constitue un moyen de fixation passif (131, 132, 133 ; 321, 322, 323) sous la forme d'une fente de fermeture (132 ; 322) formée dans le corps parallélépipédique (131 ; 321) et présentant des contre-dépouilles (133 ; 323) à laquelle est associée une fermeture (40) disposée dans le profilé de support associé, un élément d'actionnement (44) de la fermeture (40) permettant de retirer des crochets de verrouillage de la fermeture (40) s'engageant dans les contre-dépouilles (133 ; 323) et ainsi de serrer le profilé de support contre l'élément d'angle (110 ; 210 ; 310).

5. Combinaison selon l'une quelconque des revendications 1 à 4, **caractérisée en ce que** les extrémités libres (120, 130 ; 220, 230) du connecteur angulaire sont reliées d'un seul tenant à l'élément d'angle (110, 210).

6. Combinaison selon l'une quelconque des revendications 2 à 4, **caractérisée en ce que** l'élément d'angle (310) comporte des surfaces de réception (315) sur les côtés intérieurs opposés aux deux côtés extérieurs perpendiculaires l'un à l'autre, **en ce que** deux corps d'extrémité (320, 330) libres sont prévus, dont la surface d'extrémité (325, 335) opposée à l'élément d'angle (310) est conçue pour être posée sur la surface de réception (315) associée, et **en ce que** des éléments de fixation (316 ; 326, 336) sont prévus pour relier l'élément d'angle (310) aux corps d'extrémité (320, 330) libres associés.

7. Combinaison selon la revendication 6, **caractérisée en ce que** les surfaces de réception (315) forment un renfoncement pour une réception par complémentarité de forme de la surface d'extrémité (325, 335).

8. Combinaison selon l'une quelconque des revendications 1 à 7, **caractérisée en ce que** les éléments profilés (111, 112 ; 211, 212) prévus sur les deux côtés extérieurs perpendiculaires l'un à l'autre présentent une surface de paroi profilée (111 ; 211) et une fente centrale (112 ; 212) avec des contre-dépouilles (113 ; 213), les surfaces de paroi profilée (111 ; 211) perpendiculaires l'une à l'autre se rejoignant au niveau du bord d'angle (57) de l'élément d'angle (110 ; 210).
